# DEMANDE DE BREVET EUROPEEN

(11) **EP 0 950 358 A1**
(43) Date de publication de la demande: **20.10.1999**
(21) Numéro de dépôt: 98200873.2
(22) Date de dépôt: 20.03.1998
(51) Int. Cl.: A23L 1/40, A23P 1/02

(54) **Aide culinaire de type barre**

(71) Demandeur: SOCIETE DES PRODUITS NESTLE S.A., 1800 Vevey (CH)
(72) Inventeur: Guillain-Beauvois, Valérie, 8400 Winterthur (CH)
(74) Mandataire: Wavre, Claude-Alain

(57) **Abrégé**

Aide culinaire présentant la forme d'une barre et comprenant des éléments visuels tenus dans un ciment constitué de matière grasse et d'une base déshydratée.

## Description

La présente invention a pour objet un aide culinaire de type barre, un procédé pour sa préparation et une installation pour la mise en oeuvre du procédé.

US-A-4060645 (Risler et al.) décrit un produit déshydraté sous forme de grains instantanément solubles dans l'eau qui présentent une texture poreuse continue et une surface lisse que l'on peut obtenir en extrudant dans une enceinte où règne une pression subatmosphérique une matière alimentaire comprenant des extraits de fruits, légumes ou graines, des amidons, gommes ou alginates, des extraits de viande, poisson ou levure, et/ou des hydrolysats de protéines, par exemple.

US-A-4946693 (Risler et al.) décrit un produit alimentaire constitué d'une masse déshydratée sous forme de poudre ou de paillettes de lait, graisses, amidon gélatinisé, extraits de viande et légumes ou hydrolysats de protéines, par exemple, et d'une garniture de morceaux de pâtes, viande ou légumes partiellement déshydratés, par exemple, cette garniture étant conditionnée séparément.

La présente invention a pour but de proposer un aide culinaire sous une forme individuelle attractive présentant dans sa masse des morceaux visuellement identifiables de légumes, viande ou autre garniture, de la matière grasse et des ingrédients sapides pulvérulents, par exemple.

A cet effet, l'aide culinaire de type barre selon la présente invention présente la forme d'une barre de surface irrégulière et comprend 8-50% en poids d'éléments visuels tenus dans un ciment constitué de 15-35% de matière grasse et 20-70% de base déshydratée.

De même, le procédé de préparation d'un aide culinaire de type barre selon la présente invention comprend les étapes successives de mélange des éléments visuels avec la matière grasse fondue et la base déshydratée, formation d'une abaisse du mélange obtenu, découpage et refroidissement.

Enfin, l'installation pour la mise en oeuvre du procédé de préparation d'un aide culinaire de type barre selon la présente invention comprend un dispositif de mélange des éléments visuels avec la matière grasse fondue et la base déshydratée, un dispositif de formation d'une abaisse du mélange obtenu, un dispositif de découpage et un dispositif de refroidissement.

L'aide culinaire selon la présente invention présente effectivement tous les ingrédients désirés dans une seule et même barre d'aspect attrayant en raison des éléments visuels ou morceaux identifiables dans sa masse. Les éléments visuels y sont juste enrobés du ciment. L'aide culinaire présente une structure lâche et une capacité de s'émietter facilement qui augmente en fonction du pourcentage en éléments visuels.

Le procédé et l'installation selon la présente invention permettent de préparer cet aide culinaire d'une manière simple et en un nombre limité d'étapes.

Dans le présent exposé, l'expression "en forme de barre" est à comprendre comme présentant une forme de barre de relativement petite taille, de section parallélipipédique et de quelques cm de longueur, par exemple.

L'expression "éléments visuels" est à comprendre comme éléments dont la taille est suffisamment grande et la couleur suffisamment contrastée par rapport à celle du ciment pour être distingués à l'oeil nu.

Le terme "ciment" est à comprendre comme une masse de texture et de couleur homogènes capable d'assurer la cohésion de l'aide culinaire après refroidissement malgré sa forte teneur en éléments visuels.

L'aide culinaire selon la présente invention comprend donc 8-50% en poids d'éléments visuels tenus dans un ciment constitué de 15-35% de matière grasse et 20-70% de base déshydratée.

Dans cet aide culinaire, les éléments visuels peuvent être des morceaux déshydratés de tout produit alimentaire pouvant entrer en considération comme garniture.

Ces éléments visuels peuvent être en particulier des morceaux d'un ou plusieurs légumes, fruits, herbes aromatiques, viandes, poissons et/ou crustacés, des épices et/ou des graines entières ou concassées, par exemple.

La matière grasse peut comprendre au moins une graisse végétale et/ou une graisse animale, hydrogénée ou non et additionnée ou non d'un agent antioxydant.

Cette matière grasse présente de préférence une nature ou une composition telle qu'elle soit figée à température ambiante, autrement dit à une température comprise entre environ 20 et 30°C, par exemple. Une graisse de palme hydrogénée qui présente un point de fusion compris entre environ 41 et 46°C convient particulièrement bien à cet égard.

La base déshydratée peut comprendre des matières alimentaires sous forme finement subdivisée choisies en fonction de leur aptitude à conférer à l'aide culinaire une sapidité ou une texture adéquate, par exemple.

Cette base déshydratée peut comprendre en particulier des agents aromatisants tels que sucres, sels, épices, extraits de fruits, légumes ou viandes, hydrolysats de protéines, autolysats de levure, produits de la réaction de Maillard ou molécules aromatiques, des agents exhausteurs de goût tels que des 5'-nucléotides ou du glutamate, et/ou des agents liants tels que des amidons, maltodextrines, gommes ou alginates, par exemple.

L'aide culinaire peut enfin comprendre des additifs technologiques tels que de la lécithine, utilisée pour améliorer la plasticité du mélange initial, par exemple.

Pour mettre en oeuvre le procédé de préparation d'un aide culinaire selon la présente invention, on peut ajouter la base déshydratée à la matière grasse fondue, mélanger et ajouter les éléments visuels en fin de mélange, par exemple. La température de la graisse fondue peut être d'environ 50-70°C, par exemple.

On ajuste de préférence la température du mélange des éléments visuels avec la matière grasse fondue et la base déshydratée à une valeur telle qu'il présente des propriétés plastiques adéquates pour la formation d'une abaisse, sans être ni trop liquide ni trop dur. Une température d'environ 35-45°C peut être recommandée à cet égard.

On peut former une abaisse du mélange par laminage et/ou extrusion, par exemple, l'essentiel étant que peu de pression soit exercée sur le mélange au cours de l'opération.

On peut former une abaisse du mélange en le faisant passer entre deux ou trois cylindres contigus et/ou entre une table de transfert et un ou deux cylindres successifs, les cylindres et/ou la table étant de préférence lisses et pouvant être régulés en température, par exemple. La température des cylindres peut être ajustée à une valeur comprise entre 35 et 50°C, et celle de la table à une valeur comprise entre 10 et 40°C, par exemple.

On peut former ainsi une abaisse du mélange de 5 à 30 mm d'épaisseur, de préférence 8 à 20 mm d'épaisseur, par exemple.

On peut découper le ruban longitudinalement pour former des bandes présentant la largeur désirée de la barre, notamment une largeur de 5-50 mm, de préférence 15-30 mm, par exemple. On peut ensuite découper les bandes transversalement, pour obtenir les barres individuelles, notamment des barres de 30-120 mm de longueur, par exemple.

Dans un mode de réalisation particulier du présent procédé, on diminue une tendance de la barre à s'effriter par pulvérisation ou enrobage de matière grasse liquide ou par refonte de la matière grasse en surface de la barre.

On peut ensuite refroidir les barres, notamment en les faisant passer au travers d'un tunnel de refroidissement dans lequel on fait circuler de l'air à 5-10°C, par exemple.

Dans l'installation pour la mise en oeuvre du procédé de préparation d'un aide culinaire selon la présente invention, le dispositif de mélange des éléments visuels avec la matière grasse fondue et la base déshydratée peut comprendre un mélangeur, notamment un mélangeur à ruban à double paroi, par exemple.

Un mélangeur à double paroi peut servir simultanément de dispositif d'ajustement de la température du mélange à une valeur adéquate, notamment par circulation d'un fluide caloporteur à environ 30-70°C, par exemple.

Le dispositif de mélange peut être relié au dispositif de formation d'une abaisse par l'intermédiaire de moyens de transport, de préférence thermorégulés, tels qu'un tapis roulant ou une vis d'Archimède, le tapis ou la vis débouchant au-dessus d'une trémie d'alimentation du dispositif de formation d'une abaisse, par exemple.

Le dispositif de formation d'une abaisse peut être du type laminoir et/ou extrudeur et peut comprendre deux ou trois cylindres contigus et/ou une table de transfert surmontée d'un ou deux cylindres successifs, les cylindres et la table étant de préférence lisses et thermorégulés, par exemple.

Le dispositif de découpage peut comprendre des moyens de découpage longitudinal comprenant notamment des coutaux rotatifs montés sur un axe transversal rotatif, ces coutaux tournant dans des fentes longitudinales prévues dans une table de découpage prévue dans le prolongement de la table de transfert, par exemple.

Ces couteaux peuvent comprendre des lames autonettoyantes tournant à des vitesses très rapides, notamment à plus de 3000 révolutions par min, par exemple. L'écartement des couteaux ou la distance entre couteaux successifs sur l'axe peut être ajustée en fonction de la largeur que l'on désire conferrer aux barres.

Le dispositif de découpage peut comprendre en outre des moyens de découpage transversal comprenant notamment une guillotine ou un système de découpe au jet d'eau.

Enfin, un dispositif de refroidissement peut être prévu sous forme d'un tunnel à ciculation d'air froid au travers duquel les aides culinaires peuvent être transportés par une bande de transport qui les recueille à la sortie du dispositif de découpage, par exemple.

L'installation pour la mise en oeuvre du procédé de préparation d'un aide culinaire selon la présente invention est décrite ci-après en référence au dessin annexé dans lequel:

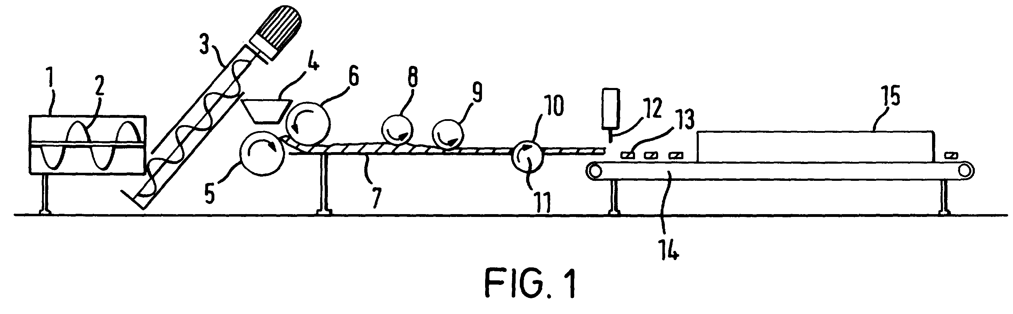

• la figure 1 est une vue schématique de côté d'une forme de réalisation de l'installation.

Dans la forme de réalisation représentée à la figures 1, la présente installation comprend un dispositif de mélange (1,2), un dispositif de formation d'une abaisse (5-9), un dispositif de découpage (10-14) et un dispositif de refroidissement (15).

Le dispositif de mélange comprend un mélangeur (1) à ruban (2) à double paroi. Il est relié au dispositif de formation d'une abaisse par l'intermédiaire d'une vis d'Archimède (3) débouchant au-dessus d'une trémie d'alimentation (4).

Le dispositif de formation d'une abaisse est du type laminoir et comprend deux cylindres contigus (5,6) suivis d'une table de transfert (7) surmontée de deux cylindres successifs (8 et 9). Les interstices entre les deux cylindres contigus puis entre les cylindres et la table vont diminuant de manière à former une abaisse d'épaisseur réduite progressivement jusqu'à une valeur finale désirée.

Le dispositif de découpage est prévu dans un prolongement de la table de transfert après le dernier cylindre de laminage (9) et il comprend des moyens de découpage longitudinal (10) et des moyens de découpage transversal (12).

Les moyens de découpage longitudinal comprennent des couteaux rotatifs (10) montés sur un axe (11) transversal rotatif. Ces couteaux tournent dans des fentes longitudinales prévues dans une table de découpage réalisée dans le prolongement de la table de transfert (7). L'écartement des couteaux est ajustable en fonction de la largeur que l'on désire conférer aux bandes découpées dans l'abaisse.

Les moyens de découpage transversal comprennent une guillotine (12).

Les barres individuelles 13 découpées des bandes par la guillotine tombent sur une bande de transport (14) qui les transporte au travers d'un tunnel de refroidissement (15) à circulation d'air froid.

L'aide culinaire de type barre selon la présente invention est destiné à être utilisé comme assaisonnement pour la cuisson de tout mets tel que viande, légume ou pâte. Il se prête particulièrement bien à une commercialisation comme accompagnement de pâtes ou riz, notamment comme accompagnement de pâtes orientales, dans le sachet même qui renferme ces pâtes. Enfin, il se prête également à la préparation de bouillons clairs enrichis d'une garniture colorée.

L'aide culinaire selon la présente invention et son procédé de préparation sont illustrés ci-après à l'aide d'exemples dans lesquels les pourcentages sont indiqués en poids.

### Exemple 1

On prépare un aide culinaire à l'aide d'une installation semblable à celle représentée à la figure 1, à l'exception du fait qu'à la place du dispositif de type laminoir tel que représenté on utilise une presse à cylindres lisses commercialisée sous le nom de FORMPRESS type GP par la firme allemande BEPEX-HUTT.

Dans un mélangeur à ruban, on mélange les ingrédients suivants, en % en poids du mélange:

| | |
|---|---|
| Graisse de palme hydrogénée (point de fusion 44-46°C) | 30% |
| Sel fin | 43% |
| Glutamate de sodium | 2% |
| Oignon blanc en poudre | 9% |
| Agent aromatisant conférant le goût d'une viande | 3% |
| Sirop de glucose | 1% |
| Carottes déshydratées (6x6x2mm) | 6% |
| Oignon lyophilisé (3x3x3mm) | 4% |
| Persil feuille déshydraté | 2% |

Pour réaliser ce mélange, la graisse de palme hydrogénée est fondue et portée au préalable à une température de 58,5°C. La température de la double paroi du mélangeur est maintenue à 50°C. Le ruban tourne à 12 révolutions par min. Les ingrédients sont mélangés ainsi durant 12 min.

On obtient en guise de mélange une masse sableuse mais cohésive présentant une température de 41,5°C.

On forme une abaisse du mélange de 12 mm d'épaisseur. On la découpe longitudinalement en bandes de 25 mm de largeur. On découpe alors les bandes en barres de 35 mm de longueur et on les refroidit à température ambiante.

L'aide culinaire ainsi obtenu présente une forme de barre de section rectangulaire et à surface irrégulière dans laquelle les légumes colorés se détachent bien sur un fond de ciment jaune pâle.

## Revendications

1. Aide culinaire présentant la forme d'une barre de surface irrégulière et comprenant 8-50% en poids d'éléments visuels tenus dans un ciment constitué de 15-35% de matière grasse et 20-70% de base déshydratée.

2. Aide culinaire selon la revendication 1, dans laquelle les éléments visuels sont des morceaux déshydratés d'un ou plusieurs légumes, fruits, herbes aromatiques, viandes, poissons et/ou crustacés, des épices et/ou des graines entières ou concassées.

3. Aide culinaire selon la revendication 1, dans laquelle la matière grasse comprend au moins une graisse végétale et/ou une graisse animale, hydrogénée ou non et additionnée ou non d'un agent antioxydant, et elle est figée à température ambiante.

4. Aide culinaire selon la revendication 1, dans laquelle la base déshydratée comprend des matières alimentaires sous forme finement subdivisée.

5. Procédé de préparation d'un aide culinaire selon l'une des revendications 1-4, comprenant les étapes successives de mélange des éléments visuels avec la matière grasse fondue et la base déshydratée, formation d'une abaisse du mélange obtenu, découpage et refroidissement.

6. Procédé selon la revendication 5, dans lequel on ajuste la température du mélange des éléments visuels avec la matière grasse fondue et la base déshydratée à une valeur telle qu'il présente des propriétés plastiques adéquates pour la formation d'une abaisse.

7. Procédé selon la revendication 6, dans lequel on ajoute la base déshydratée à la matière grasse fondue, on mélange, on ajoute les éléments visuels en fin de mélange, et l'on ajuste la température du mélange à 35-45°C.

8. Installation pour la mise en oeuvre du procédé de préparation d'un aide culinaire selon l'une des revendications 5-7, comprenant un dispositif de mélange des éléments visuels avec la matière grasse fondue et la base déshydratée, un dispositif de formation d'une abaisse du mélange obtenu, un dispositif de découpage et un dispositif de refroidissement.

9. Installation selon la revendication 8, dans laquelle le dispositif de formation d'une abaisse est du type laminoir et/ou extrudeur à cylindres lisses.

10. Installation selon la revendication 8, dans laquelle le dispositif de découpage comprend des moyens de découpage longitudinal et des moyens de découpage transversal.
